(19) Europäisches Patentamt
European Patent Office
Office européen des brevets

(11) **EP 2 211 437 B1**

(12) **EUROPEAN PATENT SPECIFICATION**

(45) Date of publication and mention
of the grant of the patent:
**25.03.2020 Bulletin 2020/13**

(51) Int Cl.:
**H02H 3/347** *(2006.01)*    **H02H 3/33** *(2006.01)*

(21) Application number: **09008096.1**

(22) Date of filing: **19.06.2009**

(54) **Earth leakage tester, earth leakage circuit breaker equipped with the same, circuit breaker, and insulation monitor**

Erdschlusstester, damit ausgestattete Fehlerstromschutzschaltung, Schutzschaltung und Isolationsmonitor

Testeur de perte à la terre, disjoncteur de perte à la terre équipé de celui-ci, disjoncteur, et moniteur d'isolation

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **23.01.2009 JP 2009013342**

(43) Date of publication of application:
**28.07.2010 Bulletin 2010/30**

(73) Proprietor: **Mitsubishi Electric Corporation Chiyoda-ku Tokyo 100-8310 (JP)**

(72) Inventor: **Mori, Mitsugi Tokyo 100-8310 (JP)**

(74) Representative: **Hoffmann Eitle Patent- und Rechtsanwälte PartmbB Arabellastraße 30 81925 München (DE)**

(56) References cited:
**US-A1- 2004 220 759    US-A1- 2006 020 406 US-A1- 2008 165 462**

**Description**

BACKGROUND OF THE INVENTION

FIELD OF THE INVENTION

The present invention relates to an earth leakage tester that generates a test signal for detecting an operation of an earth leakage detector, an earth leakage circuit breaker equipped with the earth leakage tester, a circuit breaker, and an insulation monitor.

BACKGROUND ART

In an earth leakage tester in an earth leakage circuit breaker in the related art described in JP-A-5-182579, a test switch, a test resistor, a test winding of a residual current transformer are connected in series between the lines of an AC circuit. When the test switch is closed, a test current, which is an artificial earth leakage current for earth leakage detection test, is flown through the test winding of the residual current transformer from the AC circuit via the test switch and the test resistor. The test current has an AC waveform in almost the same phase as the line voltage of the AC circuit.

An earth leakage current includes an earth leakage current Ioc resulting from an electrostatic capacity to earth and an earth leakage current Ior resulting from insulation resistance to earth. An output of the residual current transformer is an earth leakage current Io that is a vector synthesis of these two earth leakage currents. An earth leakage detector in an earth leakage circuit breaker in the related art detects the magnitude of the vector synthesized earth leakage current Io. Hence, a test operation is enabled with an AC waveform in the same phase as a voltage across the AC circuit generated by the earth leakage tester in the earth leakage circuit breaker in the related art.

An earth leakage fire or the like against which a safeguard is to be provided by the earth leakage circuit breaker is caused by deterioration in insulation resistance. It thus becomes possible to provide a precise safeguard against an earth leakage by detecting the earth leakage current Ior resulting from insulation resistance to earth. As is disclosed in Japanese Patent No. 4159590, an earth leakage detector that detects the earth leakage current Ior has to calculate the earth leakage current Ior through computations on the basis of a phase difference from the circuit voltage in addition to the magnitude of an output of the residual current transformer.

In the earth leakage detector that detects the earth leakage current Ior as above, the earth leakage current Ior is different in phase from a circuit voltage that is measured in a phase in which insulation deterioration occurs. Hence, in order to enable a test operation, it is necessary to flow a test current containing the earth leakage current Ior component that takes into account an AC circuit voltage that is to be measured.

However, in an earth leakage tester in the earth leakage circuit breaker in the related art, a test current is in the same phase as a voltage taken from the AC circuit. Accordingly, a test current may possibly flow in a phase in which the earth leakage current Ior cannot be computed depending on a wire system of the AC circuit. This poses a problem that a test operation of the earth leakage detector is not enabled.

Patent document US 2008/165462 A1 relates to a leak current breaker including a detector to detect a leakage current from electric lines, a first removing unit to convert the detected leakage current into a voltage and a voltage detector to detect a voltage developed in electric lines A under testing, a second removing unit to remove a harmonic component included in the voltage, a phase contrast detector to detect a phase contrast from a signal waveform having the harmonic component removed, a frequency calculator to calculate a frequency occurring on electric lines A on the basis of the signal waveform of the voltage having the harmonic component removed by the second removing unit, a phase angle calculator to calculate a phase angle of the leakage current flowing through the electric lines A on the basis of the phase contrast and frequency,; a root-mean-square value calculator to calculate a root-mean-square value of the voltage having the harmonic component removed by the first removing unit, a calculator to calculate a leakage current component Igr arising from an earth insulation resistance included in the leakage current flowing through the electric lines A on the basis of the root-mean-square value and phase angle of the leakage current, a judging unit to judge whether the leakage current component Igr calculated by the calculator has exceeded an arbitrary value, and a circuit breaker to break the electric lines A on the basis of the judgment made by the judging unit.

SUMMARY OF THE INVENTION

The invention was devised to solve the problems discussed above and has an object to obtain an earth leakage tester built into an earth leakage detector that detects the earth leakage current resulting from insulation resistance to earth, an earth leakage circuit breaker equipped with the same, a circuit breaker, and an insulation monitor.

An earth leakage tester according to one aspect of the invention is provided in an earth leakage detector that detects an earth leakage current resulting from insulation resistance to earth from an output of a residual current transformer inserted in an AC circuit and configured to generate a test signal for detecting an earth leakage detection operating point.

The earth leakage tester includes a test signal generation portion that generates, as the test signal, a signal having a same cycle as a voltage of the AC circuit and of which phases are switched selectively according to a wire system of the AC circuit.

According to the invention, the phases of a test current can be switched selectively according to a voltage signal taken from the AC current and a wire system of the AC circuit. It is therefore possible to enable a test operation of the earth leakage detector that detects the earth leakage current resulting from insulation resistance to earth in a reliable manner.

The foregoing and other object, features, aspects, and advantages of the present invention will become more apparent from the following detailed description of the present invention when taken in conjunction with the accompanying drawings.

BRIEF DESCRIPTION OF THE DRAWINGS

Fig. 1 is a block circuit diagram showing an earth leakage circuit breaker according to a first embodiment of the invention;
Fig. 2 is a flowchart depicting an operation of a test signal generation portion of Fig. 1;
Fig. 3 is a waveform chart showing the relation between an input voltage and a generated test signal of the test signal generation portion of Fig. 1;
Fig. 4 is a vector diagram showing the relation between an earth leakage current and a voltage of a single-phase circuit in the earth leakage circuit breaker of the first embodiment;
Fig. 5 is a vector diagram showing the relation among voltages in the respective phases in a three-phase, Δ-connection, S-phase ground circuit in the earth leakage circuit breaker of the first embodiment;
Fig. 6 is a vector diagram showing the relation between a voltage and an earth leakage current in a steady state of the three-phase, Δ-connection, S-phase ground circuit in the earth leakage circuit breaker of the first embodiment;
Fig. 7 is a vector diagram showing the relation between an earth leakage current and a voltage in the case of T-phase ground fault in the three-phase, Δ-connection, S-phase ground circuit in the earth leakage circuit breaker of the first embodiment;
Fig. 8 is a vector diagram showing the relation between an earth leakage current and a voltage in the case of R-phase ground fault in the three-phase, Δ-connection, S-phase ground circuit in the earth leakage circuit breaker of the first embodiment;
Fig. 9 is a vector diagram showing the relation among a test current, an earth leakage current, and a voltage in a case where a test signal and a voltage RT are in the same phase in the three-phase, Δ-connection, S-phase ground circuit in the earth leakage circuit breaker of the first embodiment;
Fig. 10 is a vector diagram showing the relation among a test current, an earth leakage current, and a voltage in a case where a test signal is offset from a voltage RT in phase by 90° in the three-phase, Δ-connection, S-phase ground circuit in the earth leakage circuit breaker of the first embodiment;
Fig. 11 is a block circuit diagram showing a circuit breaker according to a second embodiment of the invention; and
Fig. 12 is a block circuit diagram showing an insulation monitor according to a third embodiment of the invention.

DESCRIPTION OF THE PREFERRED EMBODIMENTS

First Embodiment

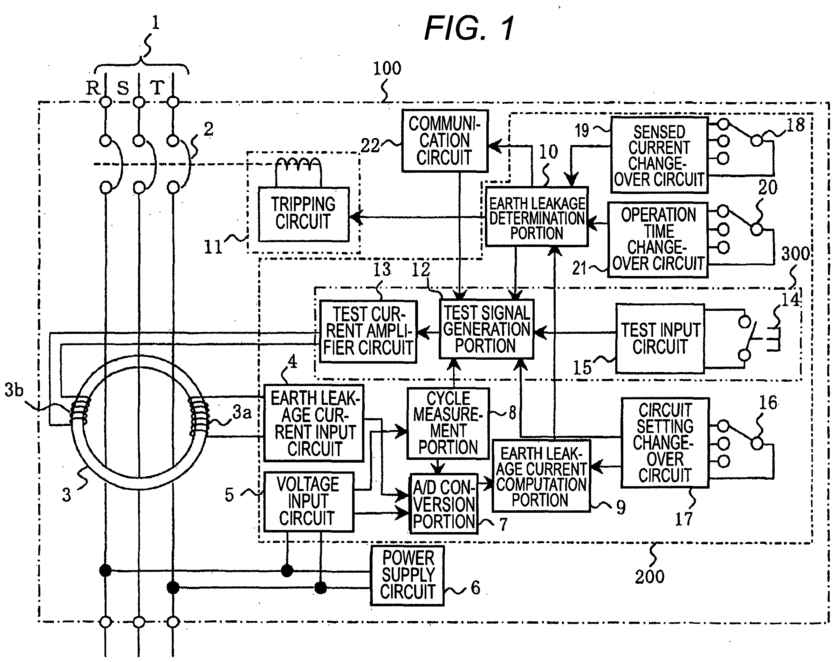

Fig. 1 is a block circuit diagram showing an earth leakage circuit breaker 100 having a built-in earth leakage tester according to a first embodiment of the invention. Referring to Fig. 1, a switching contact 2 of the earth leakage circuit breaker 100 is connected to a three-phase (phase R, phase S, and phase T) AC circuit 1, and it opens to disconnect the AC circuit 1 when a tripping circuit 11 activates. A residual current transformer 3 outputs a current signal proportional to an earth leakage current occurring in the AC circuit 1 or an artificial earth leakage current flowing through a test winding 3b to a secondary winding 3a. A power supply circuit 6 is connected to the AC circuit 1 and generates a power supply voltage of the earth leakage circuit breaker 100.

In an earth leakage detector 200, an earth leakage current input circuit 4 and a voltage input circuit 5 respectively convert an output current of the secondary winding 3a of the residual current transformer 3 and a voltage taken from the AC circuit 1 into voltage signals that can be converted from an analog form to a digital form in an A/D conversion portion 7. The A/D conversion portion 7 converts output signals of the earth leakage current input circuit 4 and the voltage input circuit 5 that are in an analog form into a digital form in a sampling cycle corresponding to a cycle of a circuit voltage measured by a cycle measurement portion 8.

An earth leakage current computation portion 9 calculates an earth leakage current Ior resulting from insulation resistance to earth on the basis of a voltage and an earth leakage current signal converted from an analog form to a digital form and a circuit set value set in a circuit setting change-over circuit 17 connected to a circuit setting change-over switch 16.

A leakage determination portion 10 determines an earth leakage on the basis of the calculated earth leakage current Ior, a sensed current value set in a sensed current change-over circuit 19 connected to a sensed current change-over switch 18, and an operation time set in an operation time change-over circuit 21 connected to an operation time change-over switch 20. It outputs a signal upon determination of an earth leakage. The tripping circuit 11 is activated with the signal outputted from the leakage determination portion 10.

Meanwhile, the cycle measurement portion 8 calculates timing of a zero cross point of a voltage signal from the voltage input circuit 5 and measures a cycle of the circuit voltage.

The earth leakage current computation portion 9 will be briefly described in the following (see Japanese Patent No. 4143463 for details).

The earth leakage current Ior calculated in the earth leakage current computation portion 9 is constant independently of the frequency of higher harmonics of the AC circuit 1 whereas an electrostatic capacity to earth has a characteristic that it is inversely proportional to the frequency of higher harmonics of the AC circuit 1. A ratio of an amount of a leakage current Ic (a synthesis of Icl and Icm) resulting from an electrostatic capacity to earth depends on an order of the leakage current (denoted as L in the case of the L'th higher harmonics and as M in the case of the M'th higher harmonics). A relation expressed as Equation (1) below is thus established.

$$Icl:L = Icm:M \qquad \dots (1)$$

where Icl is a leakage current component of the L'th higher harmonics and Icm is a leakage current component of the M'th higher harmonics.

When the leakage current vector is separated into currents Ir and Ic, it forms a parallelogram and end points of the respective leakage current vectors I0l and I0m and the current Ir are on a single straight line. When two parallel auxiliary lines respectively passing the end points of vectors I0l and I0m and parallel to the current Ir are drawn from this parallelogram, a length of a given straight line passing the origin and cut by the two auxiliary lines is also proportional to an order of the leakage current. An x (a phase difference between the reference phase and the earth leakage current Ir resulting from insulation resistance to earth) such that satisfies the relation as above can be determined uniquely.

To be more concrete, given x + 90 = x', then the phase difference x between the current Ir and the reference phase can be found through analysis on the relation as above in accordance with Equation (2):

$$x' = 90 + arcTan\{(a \times M \times I0l - b \times L \times I0m)/\{c \times M \times I0l - d \times L \times I0m\}\}$$

$$\dots (2)$$

where a = cos(90 - θl), b = cos(90 - θm), c = sin(90 - θl), and d = sin(90 - θm).

The phase difference x between the reference phase and the current Ir can be thus found in accordance with Equation (2) above, and the magnitude |Ir| can be found on the basis of the leakage current I0l (reference value), the phase differences θl, θm, and x, and the orders (L and M) of the respective leakage currents in accordance with Equation (3):

$$|Ir| = \{(|I0l| \times Cos(x' - \theta l) \times M/(M - L)\} \times \{Tan(x' - \theta l)$$

$$- Tan(x' - \theta m)\} \qquad \dots (3)$$

From these computations, it is possible to find the phase difference x between the current Ir and the voltage in the reference phase (phase S) and the magnitude of the current Ir.

By separating the current Ir into the phase S and the phase T, which are two phases out of three phases of the AC circuit 1, using the phase difference x, it is possible to calculate a leakage current with respect to the L'th higher harmonic voltage V1 resulting from insulation resistance to earth in the phases S and T. Herein, the L'th higher harmonic voltage V1 is a voltage value of a fundamental wave or higher harmonics used as the reference of the normalization, and it is a value obtained from a voltage measuring device via a band-pass filter. By dividing the L'th higher harmonic voltage V1 with the respective leakage currents separated into the phases S and T, it is possible to find insulation resistance to earth in the phases S and T of the AC circuit 1. Alternatively, the M' th higher harmonic voltage Vm may be normalized (multiplied by V1/Vm) to use this normalized voltage (= V1) as the reference voltage, so that the insulation resistance to earth is found by dividing this voltage with the respective leakage currents separated into the phases S and T.

In an earth leakage tester 300 provided inside the earth leakage detector 200, a test signal generator portion 12 waits for the same cycle as the cycle of the circuit voltage when there is a test input from a test input circuit 15 or a communication circuit 22, and generates a test signal carrying a measured voltage and an arbitrary phase difference taken from the AC circuit 1.

In addition, the test signal generation portion 12 is able to selectively switch the phase differences of the test signal from the measured voltage taken from the circuit according to the circuit setting value set in the circuit setting change-over circuit 17. The test signal thus generated is amplified by a test current amplifier circuit 13 and an artificial earth leakage current starts to flow through the test winding 3b of the residual current transformer 3.

The test signal generation portion 12 stops generating the test signal when the earth leakage determination portion 10 outputs a signal upon determination of an earth leakage.

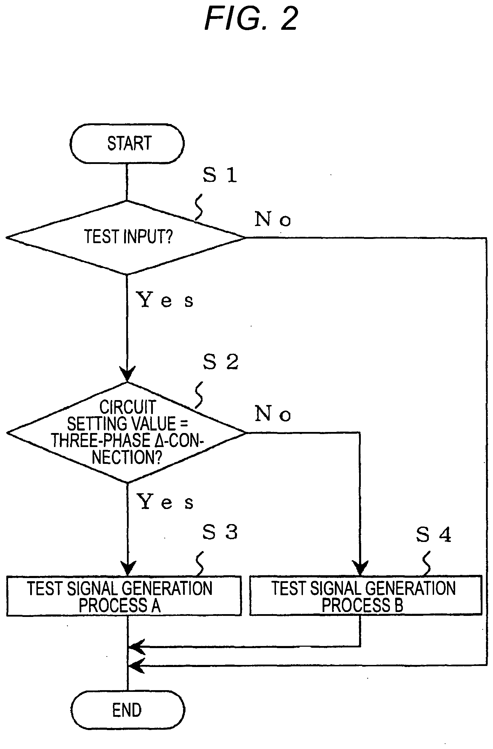

Fig. 2 shows a determination process up to the test signal generation by the test signal generation portion 12. Whether a test signal is to be generated is determined in Step S1 on the basis of whether there is a test input and the circuit setting value is set in Step S2. According to this circuit setting value, either Step S3 (test signal generation process A) or Step S4 (test signal generation process B) is selected and performed.

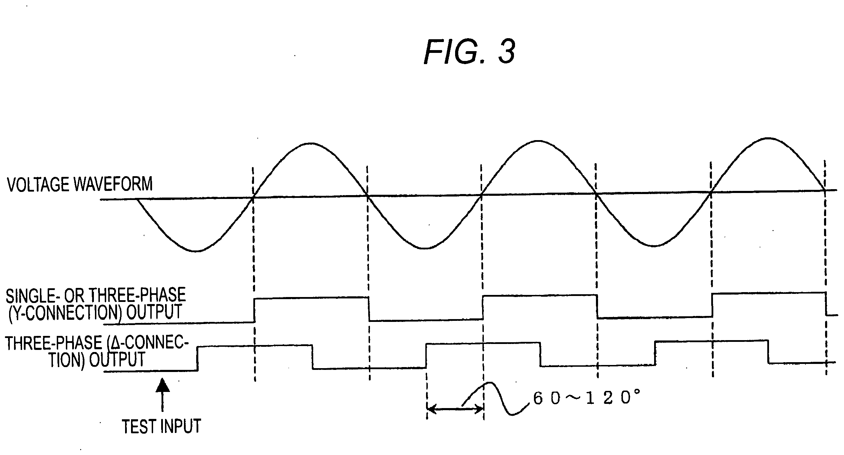

Fig. 3 is a view showing the relation between test signal waveforms generated in the test signal generation process A in Step S3 and in the test signal generation process B in Step S4 and a voltage signal inputted. The zero cross point of the voltage waveform is calculated in the cycle measurement portion 8 and the test signal waveforms are generated in reference to this zero cross point.

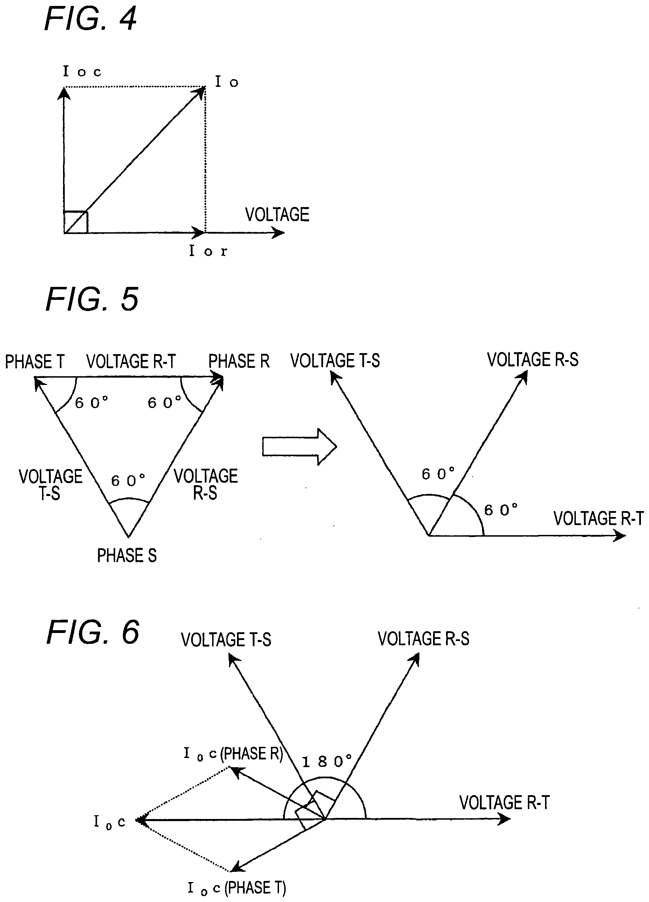

For example, in the case of a single-phase, two-wire circuit, the relation between the voltage and the earth leakage current is as shown in Fig. 4. Because the earth leakage current Ior is a current flowing into a resistance component, a phase difference with respect to a voltage is 0°. On the contrary, because the earth leakage current Ioc is a current flowing into the electrostatic capacity component, a phase difference with respect to a voltage is 90°. By configuring in such a manner that a test current that will be used as an artificial earth leakage current has a phase difference close to 0° with respect to a voltage, the earth leakage current Ior component becomes larger, which enables a test operation. Herein, with a test current having a phase difference close to 90° with respect to a voltage, the earth leakage current Ior component is almost 0, which makes it impossible to detect the earth leakage current Ior.

To avoid such an inconvenience, when the circuit setting is a single- or three-phase Y-connection, a test signal waveform in the same phase as the voltage waveform is generated in the test signal generation process B.

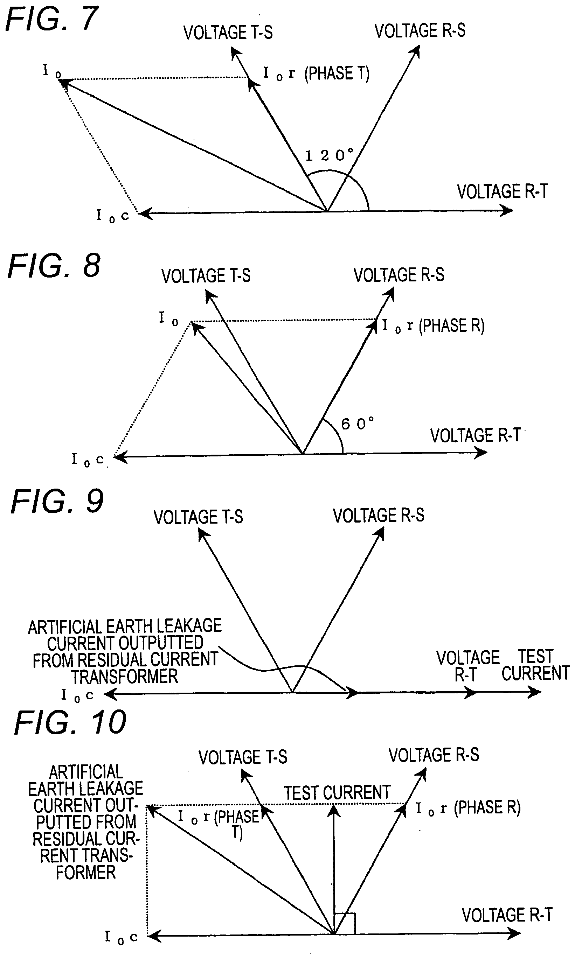

For example, in the case of a three-phase, ∆-connection, S-phase ground circuit, the relation among voltages in the respective phases is as shown in Fig. 5. The relation of a voltage and the earth leakage current in a steady state in the absence of deterioration in insulation, an earth leakage accident, and the like is as shown in Fig. 6. Herein, a case where deterioration in insulation occurs in the phase T is as shown in Fig. 7. Given a voltage RT as the reference voltage, then the phase of the earth leakage current Ior is 120° and the earth leakage current Ioc is 180°. Likewise, a case where deterioration in insulation occurs in the phase R is as shown in Fig. 8. Given a voltage RT as the reference voltage, then the phase of the earth leakage current Ior is 60° and the earth leakage current Ioc is 180°. In the case of the S-phase ground, it is necessary for the detection means of the earth leakage current Ior to detect an earth leakage caused by deterioration in insulation in both the phases R and T. Herein, given a voltage RT as the measured voltage, then an earth leakage resulting from deterioration in insulation can be detected in both the phases R and T by finding a component that becomes perpendicular to the voltage RT in the measured voltage.

By setting a test signal in the same phase as the voltage RT in the measured voltage, then an artificial earth leakage current to be outputted from the residual current transformer 3 is a synthesis of a test current and the earth leakage current Ioc. A vector relation as shown in Fig. 9 is thus obtained. Herein, because a component that becomes perpendicular to the voltage RT is reduced to 0, it cannot be measured as the earth leakage current Ior. Hence, an earth leakage test operation is not enabled no matter how large the test current is increased.

In order to avoid this inconvenience, a test signal waveform having a phase offset by 60 to 120° from the measured voltage is generated in the test signal generation process A. An artificial earth leakage current containing the earth leakage current Ior component large enough for an operation is thus allowed to flow, which enables an earth leakage test operation. Fig. 10 is a vector diagram in a case where a test signal has a phase offset by 90° from the measured voltage. An artificial earth leakage current to be outputted from the residual current transformer 3 is a synthesis of the test current and the earth leakage current Ioc and the component that becomes perpendicular to the voltage RT takes the same value as the test current. It is therefore possible to determine the earth leakage current Ior in each of the phases R and T. A test operation is thus enabled.

According to this embodiment, the phases of a test current can be switched selectively in the test signal generation portion 12 according to a voltage signal and an arbitrary circuit setting taken from the AC circuit 1. It is therefore possible to enable, in the earth leakage circuit breaker 100, a test operation of the earth leakage detector 200 that detects the earth leakage current Ior resulting from the insulation resistance to earth in a reliable manner.

Second Embodiment

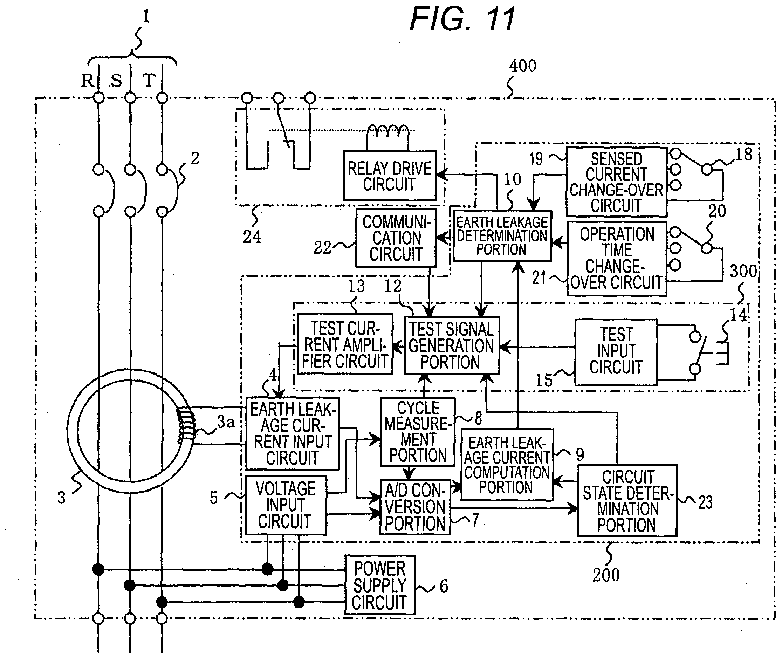

Fig. 11 is a block diagram showing a circuit breaker 400 according to a second embodiment of the invention.

The first embodiment above is configured in such a manner that the phases of a test signal are switched selectively according to the circuit setting value set in the circuit setting change-over circuit 17. In a second embodiment, as is shown in Fig. 11, by providing a circuit state determination portion 23 that determines a state of the AC circuit 1 on the basis of voltage signals in the respective phases converted from an analog form to a digital form, the need to switch the circuit setting from the outside can be eliminated.

The circuit state determination portion 23 determines a state of a single- or three-phase circuit by calculating a vector on the basis of voltage signals among respective lines converted from an analog form to a digital form and by further computing phase differences among respective line voltages on the basis of the calculated vector.

A relay output portion 24 that operates on an output of the leakage determination portion 10 is further included. When an earth leakage is detected, it generates an earth leakage alarm relay output and thereby is allowed to operate as a circuit breaker equipped with an earth leakage alarm relay output.

Further, the first embodiment above is configured in such a manner that a generated test signal is amplified by the test current amplifier circuit 13 so that the amplified test signal flows into the test winding 3b of the residual current transformer 3. Alternatively, by configuring in such a manner that the test signal is inputted into the earth leakage current input circuit 4, the test winding 3b of the residual current transformer 3 can be omitted and so are the wires.

According to the second embodiment, because the circuit state determination portion 23 that determines a state of the AC circuit 1 on the basis of the voltage signals in the respective phase of the AC circuit 1 is provided, the need to switch the circuit settings from the outside can be eliminated. The settings can be thus facilitated.

Third Embodiment

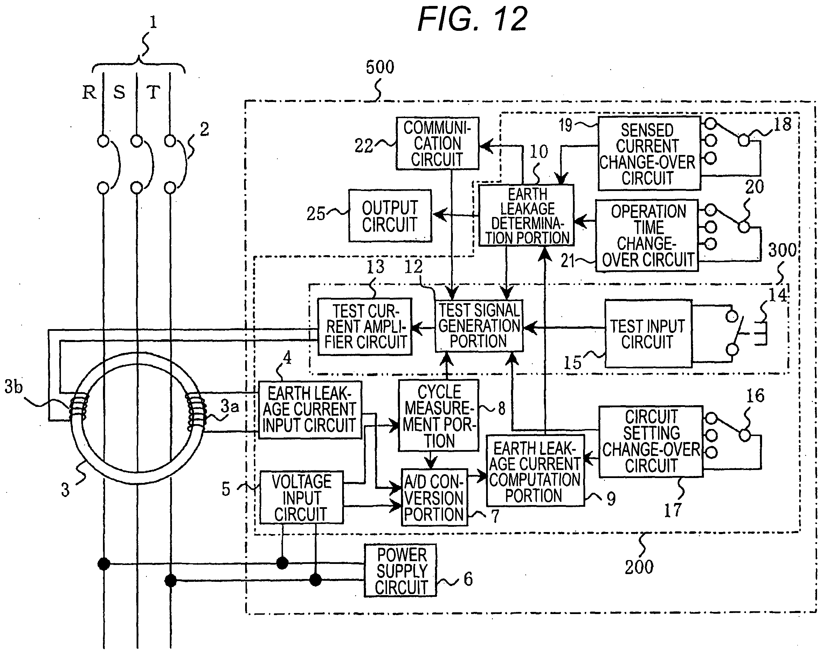

Fig. 12 is a block circuit diagram showing an insulation monitor 500 according to a third embodiment of the invention.

The first and second embodiments above described a case where the earth leakage detector 200 is applied to a circuit breaker. However, as is shown in Fig. 12, it may be used in an insulation monitor that outputs a relay output using an output circuit 29 upon detection of an earth leakage. The advantages same as those in the first and second embodiments above can be achieved herein, too.

According to the third embodiment, the phases of a test current can be switched selectively in the test signal generation portion 12 according to a voltage signal and an arbitrary circuit setting taken from the AC circuit 1. It is therefore possible to enable, in the insulation monitor 500, a test operation of the earth leakage detector 200 that detects the earth leakage current Ior resulting from insulation resistance to earth in a reliable manner.

The third embodiment described the insulation monitor equipped with the circuit setting circuit 17 in the same manner as in the first embodiment above. However, by providing the circuit state determination portion 23 that determines a state of the AC circuit 1 on the basis of the voltage signals in the respective phases of the AC circuit 1 in the same manner as in the second embodiment above, the need to switch the circuit settings from the outside can be eliminated and the settings can be facilitated.

Also, the third embodiment is configured in such a manner that a generated test signal is amplified by the test current amplifier circuit 13 so that the amplified test signal flows into the test winding 3b of the residual current transformer 3 in the same manner as in the first embodiment above. Alternatively, by configuring in such a manner that a test signal is inputted into the earth leakage current input circuit 4 in the same manner as in the second embodiment above, the test winding 3b of the residual current transformer 3 can be omitted and so are the wires.

Claims

1.   An earth leakage tester provided in an earth leakage detector(200) that detects an earth leakage current resulting from insulation resistance to earth from an output of a residual current transformer(3) inserted in an AC circuit(1) and configured to generate a test signal for detecting an earth leakage detection operating point, comprising:
a test signal generation portion(12) that generates, as the test signal, a signal having a same cycle as a voltage of

6

the AC circuit (1) and of which phases are switched selectively according to a wire system of the AC circuit(1).

2. The earth leakage tester according to claim 1, wherein:
the test signal generation portion(12) sets a phase of the test signal in reference to a voltage taken from the AC circuit(1) .

3. The earth leakage tester according to claim 1 or 2, wherein:
the test signal generation portion(12) stops outputting the test signal when the earth leakage detector detects the earth leakage current(Ior).

4. The earth leakage tester according to any one of claims 1 to 3, wherein:
the test signal generation portion(12) selectively switches the phases of the test signal according to an output of a circuit setting change-over circuit(17) that outputs a circuit setting value corresponding to the wire system of the AC circuit(1) including one of single-phase and three-phase Y-connection and a three-phase Δ-connection.

5. The earth leakage tester according to any one of claims 1 to 3, wherein:
the test signal generation portion(12) selectively switches the phases of the test signal according to an output of a circuit state determination portion(23) that determines a state of the AC circuit(1) on the basis of voltage signals in the respective phases of the AC circuit (1) that are converted from an analog form to a digital form.

6. The earth leakage tester according to any one of claims 1 to 5, wherein:
the test signal generation portion(12) inputs the test signal into an earth leakage current input circuit (4) provided to the earth leakage detector(200).

7. An earth leakage circuit breaker, comprising:

the earth leakage detector(200) having the earth leakage tester(300) according to any one of claims 1 to 6, wherein:
the AC circuit (1) is disconnected when the earth leakage detector(200) detects the earth leakage current(Ior).

8. A circuit breaker, comprising:

the earth leakage detector(200) having the earth leakage tester(300) according to any one of claims 1 to 6, wherein:
an earth leakage alarm relay output is generated when the earth leakage detector(200) detects the earth leakage current(Ior).

9. An insulation monitor, comprising:

the earth leakage detector(200) having the earth leakage tester(300) according to any one of claims 1 to 6, wherein:
a relay output is generated when the earth leakage detector(200) detects the earth leakage current(Ior).


**Patentansprüche**

1. Eine Erdschlussprüfvorrichtung, die in einem Erdschlussdetektor (200) bereitgestellt wird, der einen Erdschlussstrom detektiert, der sich aus dem Isolationswiderstand zur Erde von einem Ausgang eines Reststromtransformators (3) ergibt, der in einen Wechselstromkreis (1) eingefügt ist und konfiguriert ist, ein Prüfsignal zum Detektieren eines Erdschlussdetektionsbetriebspunktes zu erzeugen, umfassend:
einen Prüfsignalerzeugungsteil (12), der als Prüfsignal ein Signal erzeugt, das denselben Zyklus wie eine Spannung des Wechselstromkreises (1) hat und dessen Phasen selektiv gemäß einem Leitungssystem des Wechselstromkreises (1) geschaltet werden.

2. Die Erdschlussprüfvorrichtung nach Anspruch 1, wobei:
der Prüfsignalerzeugungsteil (12) eine Phase des Prüfsignals in Bezug auf eine aus dem Wechselstromkreis (1) entnommene Spannung einstellt.

**3.** Die Erdschlussprüfvorrichtung nach Anspruch 1 oder 2, wobei:
der Prüfsignalerzeugungsteil (12) die Ausgabe des Prüfsignals stoppt, wenn der Erdschlussdetektor den Erdschlussstrom (Ior) detektiert

**4.** Die Erdschlussprüfvorrichtung nach einem der Ansprüche 1 bis 3, wobei:
der Prüfsignalerzeugungsteil (12) die Phasen des Prüfsignals gemäß einem Ausgang einer Schaltungseinstellung-Umschaltschaltung (17) selektiv schaltet, die einen Schaltungseinstellwert ausgibt, der dem Drahtsystem der Wechselstromschaltung (1) entspricht, das entweder eine einphasige oder dreiphasige Y-Verbindung oder eine dreiphasige Δ-Verbindung enthält.

**5.** Die Erdschlussprüfvorrichtung nach einem der Ansprüche 1 bis 3, wobei:
der Prüfsignalerzeugungsteil (12) die Phasen des Prüfsignals gemäß einem Ausgang eines Schaltungszustandsbestimmungsteils (23) selektiv schaltet, der einen Zustand der Wechselstromschaltung (1) auf der Grundlage von Spannungssignalen in den jeweiligen Phasen der Wechselstromschaltung (1) bestimmt, die von einer analogen Form in eine digitale Form umgewandelt werden.

**6.** Die Erdschlussprüfvorrichtung nach einem der Ansprüche 1 bis 5, wobei:
der Prüfsignalerzeugungsteil (12) das Prüfsignal in einen Erdschlussstrom-Eingangskreis (4) eingibt, der dem Erdschlussdetektor (200) zugeführt wird.

**7.** Ein Erdschlussschutzschalter, umfassend:

den Erdschlussdetektor (200) mit der Erdschlussprüfvorrichtung (300) nach einem der Ansprüche 1 bis 6, wobei:
der Wechselstromkreis (1) abgeschaltet wird, wenn der Erdschlussdetektor (200) den Erdschlussstrom (Ior) detektiert.

**8.** Ein Schutzschalter, umfassend:

den Erdschlussdetektor (200) mit der Erdschlussprüfvorrichtung (300) nach einem der Ansprüche 1 bis 6, wobei:
ein Erdschlussalarmrelaisausgang erzeugt wird, wenn der Erdschlussdetektor (200) den Erdschlussstrom (Ior) detektiert.

**9.** Eine Isolationsüberwachungsvorrichtung, umfassend:
den Erdschlussdetektor (200) mit der Erdschlussprüfvorrichtung (300) nach einem der Ansprüche 1 bis 6, wobei
ein Relaisausgang erzeugt wird, wenn der Erdschlussdetektor (200) den Erdschlussstrom (Ior) detektiert.

**Revendications**

**1.** Testeur de fuite à la terre disposé dans un détecteur de fuite à la terre (200) qui détecte un courant de fuite à la terre résultant d'une résistance d'isolement à la terre à partir d'une sortie d'un transformateur de courant résiduel (3) inséré dans un circuit à courant alternatif (1) et configuré pour générer un signal de test pour détecter un point de fonctionnement de détection de fuite à la terre, comprenant :
une partie de génération de signal de test (12) qui génère, en tant que signal de test, un signal ayant un même cycle qu'une tension du circuit à courant alternatif (1) et dont des phases sont commutées de manière sélective en fonction d'un système de fil du circuit à courant alternatif (1).

**2.** Testeur de fuite à la terre selon la revendication 1, dans lequel :
la partie de génération de signal de test (12) règle une phase du signal de test en se référant à une tension prise à partir du circuit à courant alternatif (1).

**3.** Testeur de fuite à la terre selon la revendication 1 ou 2, dans lequel :
la partie de génération de signal de test (12) arrête l'émission du signal de test lorsque le détecteur de fuite à la terre détecte le courant de fuite à la terre (Ior).

**4.** Testeur de fuite à la terre selon l'une quelconque des revendications 1 à 3, dans lequel :
la partie de génération de signal de test (12) commute de manière sélective les phases du signal de test en fonction d'une sortie d'un circuit de changement de réglage de circuit (17) qui délivre en sortie une valeur de réglage de circuit correspondant au système de fil du circuit à courant alternatif (1) comprenant l'un d'un raccordement monophasé et triphasé en Y et d'un raccordement triphasé en Δ.

5. Testeur de fuite à la terre selon l'une quelconque des revendications 1 à 3, dans lequel :
la partie de génération de signal de test (12) commute de manière sélective les phases du signal de test en fonction d'une sortie d'une partie de détermination d'état de circuit (23) qui détermine un état du circuit à courant alternatif (1) sur la base de signaux de tension dans les phases respectives du circuit à courant alternatif (1) qui sont convertis d'une forme analogique à une forme numérique.

6. Testeur de fuite à la terre selon l'une quelconque des revendications 1 à 5, dans lequel :
la partie de génération de signal de test (12) entre le signal de test dans un circuit d'entrée de courant de fuite à la terre (4) fourni au détecteur de fuite à la terre (200).

7. Disjoncteur de fuite à la terre, comprenant :

le détecteur de fuite à la terre (200) ayant le testeur de fuite à la terre (300) selon l'une quelconque des revendications 1 à 6,
dans lequel :
le circuit à courant alternatif (1) est déconnecté lorsque le détecteur de fuite à la terre (200) détecte le courant de fuite à la terre (Ior).

8. Disjoncteur comprenant :

le détecteur de fuite à la terre (200) ayant le testeur de fuite à la terre (300) selon l'une quelconque des revendications 1 à 6,
dans lequel :
une sortie de relais d'alarme de fuite à la terre est générée lorsque le détecteur de fuite à la terre (200) détecte le courant de fuite à la terre (Ior).

9. Appareil de contrôle d'isolement comprenant :

le détecteur de fuite à la terre (200) ayant le testeur de fuite à la terre (300) selon l'une quelconque des revendications 1 à 6,
dans lequel :
une sortie de relais est générée lorsque le détecteur de fuite à la terre (200) détecte le courant de fuite à la terre (Ior).

**FIG. 1**

# FIG. 2

```
                    ┌─────────────┐
                    │    START    │
                    └──────┬──────┘
                           │              S 1
                           ▼
                    ╱─────────────╲        N o
                   ╱  TEST INPUT?  ╲──────────────────────┐
                    ╲─────────────╱                       │
                           │                              │
                         Y e s                            │
                           │                              │
                           │              S 2             │
                           ▼                              │
                  ╱─────────────────╲       N o           │
                 ╱     CIRCUIT        ╲                    │
                ╱   SETTING VALUE =    ╲─────────┐         │
                ╲ THREE-PHASE Δ-CON-   ╱         │         │
                 ╲     NECTION?       ╱          │         │
                  ╲─────────────────╱           │         │
                           │                     │         │
                         Y e s                   │         │
                           │       S 3           │   S 4   │
                           ▼                     ▼         │
              ┌────────────────────┐  ┌────────────────────┐
              │ TEST SIGNAL        │  │ TEST SIGNAL        │
              │ GENERATION         │  │ GENERATION         │
              │ PROCESS A          │  │ PROCESS B          │
              └─────────┬──────────┘  └─────────┬──────────┘
                        │◄─────────────────────┘          │
                        │◄────────────────────────────────┘
                        ▼
                 ┌─────────────┐
                 │     END     │
                 └─────────────┘
```

FIG. 3

## FIG. 4

## FIG. 5

## FIG. 6

*FIG. 7*

VOLTAGE T-S          VOLTAGE R-S

I₀          I₀r (PHASE T)

120°

VOLTAGE R-T

I₀c

*FIG. 8*

VOLTAGE T-S          VOLTAGE R-S

I₀          I₀r (PHASE R)

60°

VOLTAGE R-T

I₀c

*FIG. 9*

VOLTAGE T-S          VOLTAGE R-S

ARTIFICIAL EARTH LEAKAGE
CURRENT OUTPUTTED
FROM RESIDUAL CURRENT
TRANSFORMER
I₀c          VOLTAGE   TEST
             R-T      CURRENT

*FIG. 10*

ARTIFICIAL
EARTH LEAKAGE
CURRENT OUT-
PUTTED FROM
RESIDUAL CUR-
RENT TRANS-
FORMER

VOLTAGE T-S          VOLTAGE R-S

TEST CURRENT

I₀r (PHASE   I₀r (PHASE R)
T)

VOLTAGE R-T

I₀c

FIG. 11

EP 2 211 437 B1

*FIG. 12*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5182579 A
- JP 4159590 B
- US 2008165462 A1
- JP 4143463 B